Europäisches Patentamt

European Patent Office

Office européen des brevets

(11) Veröffentlichungsnummer: **0 351 538**
**A1**

## (12) EUROPÄISCHE PATENTANMELDUNG

(21) Anmeldenummer: 89110345.9

(51) Int. Cl.⁴: **F16D 37/02**

(22) Anmeldetag: 08.06.89

(30) Priorität: 20.07.88 DE 3824632

(43) Veröffentlichungstag der Anmeldung:
**24.01.90 Patentblatt 90/04**

(84) Benannte Vertragsstaaten:
**CH DE FR IT LI** .

(71) Anmelder: **SCHUBERT & SALZER MASCHINENFABRIK AG**
**Friedrich-Ebert-Strasse 84 Postfach 260**
**D-8070 Ingolstadt(DE)**

(72) Erfinder: **Deisinger, Franz**
**Neuburger Strasse 32**
**D-8070 Ingolstadt(DE)**
Erfinder: **Lovas, Kurt**
**Kapellenweg 13**
**D-8079 Böhmfeld(DE)**

(54) **Elektromagnetisch steuerbare Kupplung.**

(57) In einer elektromagnetisch steuerbaren Kupplung (2) umfaßt eines der Kupplungselemente (3) das andere, aus magnetischem Material bestehende Kupplungselement (4) radial wenigstens teilweise unter Belassung eines mit magnetisierbarem Pulver (21) aufgefüllten Zwischenraumes. Ein Elektromagnet (5) und die Kupplungselemente (3, 4) sind unabhängig voneinander gelagert. Die Polschuhe (50, 51) des Elektromagneten (5) umfassen maximal den halben Umfang der Kupplungselemente (3, 4) im Bereich des mit Pulver (21) gefüllten Zwischenraumes. Zwischen den Polschuhen (50, 51) ist ein radial nach innen bis zum Zwischenraum reichender, magnetisch neutraler Bereich vorgesehen. Den Kupplungselementen ist im Bereich des mit Pulver (21) gefüllten Zwischenraumes ein zusätzlicher Elektromagnet (5a) zustellbar.

# Elektromagnetisch steuerbare Kupplung

Die vorliegende Erfindung betrifft eine elektromagnetisch steuerbare Kupplung mit einem antreibenden und einem angetriebenen Kupplungselement, von denen das eine Kupplungselement das andere, aus magnetisierbarem Material bestehende Kupplungselement radial wenigstens teilweise umfaßt unter Belassung eines mit magnetisierbarem Pulver aufgefüllten Zwischenraumes, sowie mit einem zwei Polschuhe aufweisenden Elektromagneten, mit welchem dieser die beiden Kupplungselemente im Bereich des Zwischenraumes umfaßt.

Bei einer gattungsgemäßen Kupplung sind die beiden Kupplungselemente in einem ringförmigen Gehäuse gelagert (binder report, Heft 2/1984, Seite 10, der Firma Binder Magnete GmbH, Villingen). Dieses Gehäuse nimmt eine konzentrisch zu den Kupplungselementen angeordnete Spule auf. Das Gehäuse bildet mit der Spule einen Elektromagneten, der zusammen mit der Spule und den beiden Kupplungselementen eine bauliche Einheit bildet und nur als solche ausgebaut bzw. ausgewechselt werden kann. Darüber hinaus läßt sich die bekannte Kupplung nur über diese eine Spule steuern.

Für manche Zwecke, z.B. für Offenend-Spinnmaschinen, ist es erforderlich, die Faserspeisevorrichtung zur Zufuhr von Fasern sowohl von der Maschine aus steuern zu können, wobei die Vorrichtung lediglich ein- und auszuschalten ist, als auch von einer Wartungsvorrichtung, die längs der Maschine verfahrbar und dabei einer beliebigen einer Vielzahl von an der Maschine vorgesehenen Spinnstellen zustellbar ist. Die Wartungseinrichtung steuert die Faserspeisevorrichtung während des Anspinnvorganges, wobei es erwünscht ist, die Geschwindigkeit der Faserspeisevorrichtung an den Hochlauf des Spinnelementes und/oder des erneuten Fadenabzuges anpassen zu können. Eine solche Steuerung ist auf einfache Weise mit Hilfe der durch den "binder report" genannten Elektromagneten ebenfalls nicht möglich.

Aufgabe der Erfindung ist es, eine gattungsgemäße Kupplung so auszubilden, daß ein Ausbau oder Austausch der Kupplung auch ohne Ausbau oder Austausch der Spule erfolgen kann. Darüber hinaus soll die Kupplung so ausgebildet sein, daß sie von verschiedenen Stellen aus, evtl. auch in unterschiedlicher Weise, gesteuert werden kann.

Diese Aufgabe wird bei einer gattungsgemäßen Vorrichtung erfindungsgemäß dadurch gelöst, daß der Elektromagnet und die Kupplungselemente unabhängig voneinander gelagert sind, daß die Polschuhe des Elektromagneten maximal den halben Umfang der Kupplungselemente umfassen und daß zwischen den Polschuhen ein radial nach innen bis zum Zwischenraum reichender, magnetisch neutraler Bereich vorgesehen ist. Die unabhängige Lagerung von Elektromagnet und Kupplungselementen bildet die Voraussetzung dafür, daß die Kupplungselemente bei Bedarf unabhängig vom Elektromagneten von der Maschine gelöst werden können. Zu diesem Zweck umfaßt der Elektromagnet auch nur maximal 180° des Umfanges der Kupplungselemente. Durch den magnetisch neutralen Längenbereich, der in dem den Zwischenraum radial nach außen begrenzenden Kupplungselement im Bereich des Zwischenraumes vorgesehen ist, wird ein günstiger Magnetfeldverlauf erzielt, der eine optimale Steuerung der Verfestigung des magnetisierbaren Pulvers gewährleistet. Dabei erlauben es die mehreren Elektromagneten, die ein und demselben Kupplungselement zugeordnet sind, in platzsparender und einfacher Weise, daß das Kupplungselement von verschiedenen Stellen aus in unterschiedlicher Weise angesteuert werden kann.

Um die Kupplung in Abhängigkeit von verschiedenen Faktoren steuern zu können, können den Kupplungselementen in weiterer Ausgestaltung des Erfindungsgegenstandes auch mehr als nur ein Elektromagnet zugeordnet sein oder zugeordnet werden. Diese Elektromagneten brauchen sich dabei auch nicht die ganze Zeit in ihrer Arbeitsstellung in unmittelbarer Nähe der Kupplungselemente zu befinden, sondern es ist durchaus möglich, mindestens einen dieser Elektromagneten radial und/oder axial zu den Kupplungselementen verstellbar auszubilden. Hierzu kann der Elektromagnet schwenkbar gelagert sein. Auf diese Weise kann der bewegliche Elektromagnet im Wechsel jeweils einer von mehreren Kupplungen zugestellt werden.

Gemäß einer bevorzugten Ausführung des Erfindungsgegenstandes verbindet die Kupplung eine Antriebswelle mit einer Faserband-Lieferwalze einer Offenend-Spinnvorrichtung und ist wahlweise durch einen ersten, stationären Elektromagneten oder einen zweiten, der Kupplung zustellbaren Elektromagneten steuerbar, welcher längs einer Vielzahl gleichartiger Offenend-Spinnvorrichtungen bewegbar ist.

Um Beschädigungen der Kupplungen und/oder des Elektromagneten bei ungenauen Toleranzen zu vermeiden, sind die Polschuhe an den Kontaktflächen mit gleitfähigem Material beschichtet.

Gemäß einer einfachen Ausbildung des Erfindungsgegenstandes sind die Polschuhe längs einer Mantellinie der Kupplung angeordnet, so daß das zwischen ihnen aufgebaute Magnetfeld im wesentlichen parallel zu dieser Mantellinie verläuft.

Die erfindungsgemäße Kupplung kann unterschiedlich ausgebildet werden. Zweckmäßigerweise ist vorgesehen, daß beide Kupplungselemente und die Welle aus magnetisierbarem Material bestehen, daß beide Kupplungselemente jeweils zwei Längenbereiche aufweisen, die magnetisch voneinander getrennt sind, daß das erste Kupplungselement durch drehfeste Verbindung seines ersten Längenbereiches und das zweite Kupplungselement über einen engen Längsspalt magnetisch mit der Welle verbunden sind, daß das erste Kupplungselement den Zwischenraum mit Hilfe seines ersten und seines zweiten Längenbereiches sowie eines magnetisch neutralen Zwischenbereiches gemeinsam radial nach außen begrenzt, daß das zweite Kupplungselement den Zwischenraum mit Hilfe seines ersten Längenbereiches radial nach innen begrenzt und daß jeweils dem zweiten Längenbereich der beiden Kupplungselemente je ein Polschuh des Elektromagneten zugeordnet ist.

Damit die Kupplung nur einen geringen Durchmesser aufweist, ist in weiterer Ausgestaltung der Erfindung im Bereich des Zwischenraumes das den Zwischenraum radial nach außen begrenzende Verbindungselement dünnwandig ausgebildet und besteht dabei aus magnetisch neutralem Material. Vorteilhafterweise trägt dabei das den Zwischenraum radial nach außen begrenzende Kupplungselement im Bereich des Zwischenraumes zwei magnetisierbare Ringe, welche die magnetische Verbindung zwischen den beiden Polschuhen und dem den Zwischenraum radial nach innen begrenzenden Kupplungselement herstellen.

Gemäß einer vorteilhaften Ausgestaltung des Erfindungsgegenstandes weist das den Zwischenraum radial nach außen begrenzende Kupplungselement in radialer Fortsetzung der Polschuhe Längenbereiche aus magnetisierbarem Material auf, welche den magnetisch neutralen Bereich zwischen sich einschließen.

Die Erfindung ist unabhängig von der Orientierung des Spaltes zwischen den beiden Polschuhen. So müssen die beiden Polschuhe nicht auf ein und derselben Mantellinie der Kupplung angeordnet und durch einen in deren Umfangsrichtung angeordneten Spalt voneinander getrennt sein. Es ist vielmehr durchaus möglich und insbesondere bei Kupplungen mit geringem Durchmesser, aber größerer Länge auch sehr zweckmäßig, wenn die Polschuhe längs einer Umfangslinie der Kupplung angeordnet sind und das zwischen ihnen aufgebaute Magnetfeld im wesentlichen parallel zu dieser Umfangslinie verläuft und das den Zwischenraum radial nach außen begrenzende Kupplungselement aus nichtmagnetisierbarem Material besteht und auf seiner Außenseite mehrere in axialer Richtung orientierte Einlagen aus magnetisierbarem Material aufnimmt, die im wesentlichen im gleichen Abstand wie die Polschuhe angeordnet sind.

Um die Reibungsmitnahme zwischen den beiden Kupplungselementen zu verbessern, weist mindestens eine der dem Magnetpulver im Zwischenraum ausgesetzten Flächen der beiden Kupplungselemente eine von der Zylinderform abweichende Form auf.

Die erfindungsgemäße Kupplung und ihre Steuerung durch einen oder mehrere Elektromagneten sind einfach im Aufbau, flexibel in der Steuerung und Anwendung und leicht ein- und auszubauen oder auszutauschen. Eine in dieser Weise ausgebildete und austauschbare Kupplung ist besonders vorteilhaft bei Offenend-Spinnmaschinen, bei denen einerseits während des normalen Produktionsbetriebes sowie beim Anfahren oder Stillsetzen der gesamten Maschine alle Spinnvorrichtungen der Maschine in der gleichen Weise und andererseits während einer Fehlerbehebung in abweichender Weise arbeiten. Dies wird durch je einen individuellen ersten Elektromagneten pro Spinnvorrichtung und einen gemeinsamen, jeder Spinnvorrichtung bei Bedarf zustellbaren zweiten Elektromagneten ermöglicht.

Ausführungsbeispiele werden anhand von Zeichnungen näher erläutert, von denen

Fig. 1 im schematischen Längsschnitt zwei erfindungsgemäße Kupplungen mit je einem stationären Elektromagneten pro Kupplung sowie einem bewegbaren Elektromagneten, welcher wahlweise einem beliebigen Elektromagneten zustellbar ist;

Fig. 2 im schematischen Längsquerschnitt eine andere Ausführung einer erfindungsgemäß ausgebildeten Kupplung;

Fig. 3 eine weitere Abwandlung des Erfindungsgegenstandes im Längsschnitt mit einer Antriebs- und einer Bremsvorrichtung

Fig. 4 und 5 im Querschnitt bzw. im Längsschnitt eine weitere Abwandlung der erfindungsgemäßen Kupplung, bei welcher die Polschuhe des Elektromagneten in Umfangsrichtung der Kupplung angeordnet sind;

Fig. 6 im Schema die wesentlichsten Steuer- und Regelelemente einer Regelstrecke mit einer erfindungsgemäßen Kupplung; und

Fig. 7 im Schema eine Offenend-Rotorspinnstelle mit der erfindungsgemäßen Kupplung zeigen.

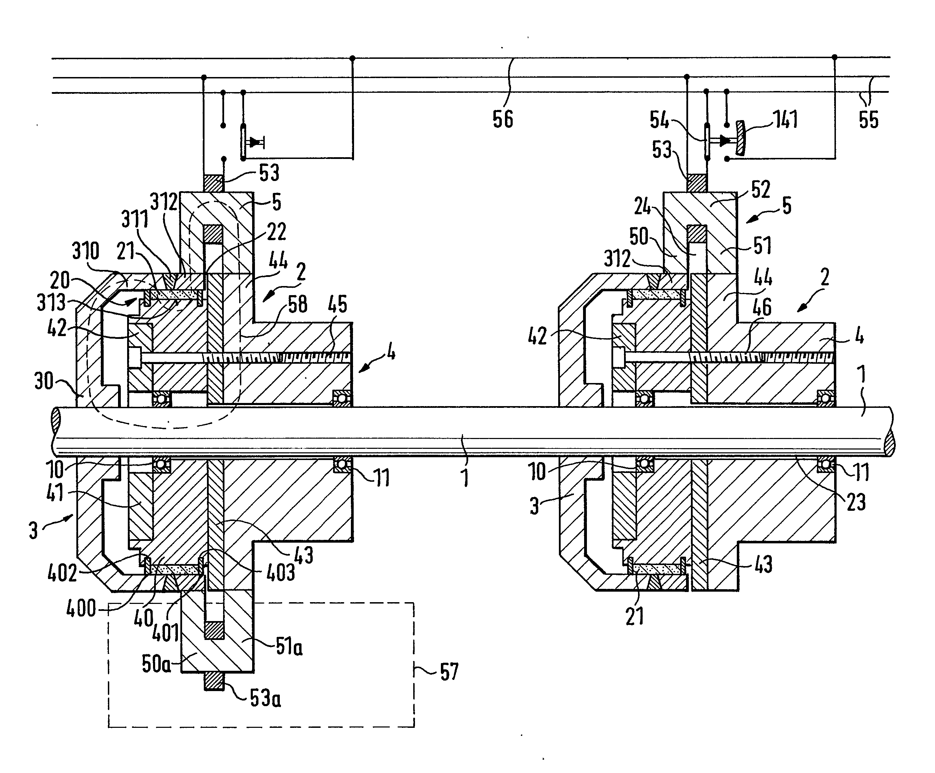

Der Erfindungsgegenstand wird zunächst am Beispiel der in Figur 1 gezeigten Vorrichtung erläutert.

Auf einer durchgehenden Welle 1 aus magnetisierbarem Material, beispielsweise der Antriebswelle für die Speisewalzen einer Vielzahl nebeneinander befindlicher Spinnstellen einer Offenend-Spinnmaschine, befinden sich mehrere erfindungsgemäß ausgebildete Kupplungen 2. Jede Kupplung besitzt ein antreibendes erstes Kupplungselement 3, das drehfest mit der Welle 1 verbunden ist, sowie ein angetriebenes zweites Kupplungselement 40, das mit Hilfe zweier Wälzlager 10 und 11 auf der Welle 1 gelagert ist.

Das antreibende Kupplungselement 3 ist durch einen magnetisch neutralen Zwischenbereich 311 in einen ersten magnetisch aktivierbaren Längenbereich 310 und einen zweiten, ebenfalls magnetisch aktivierbaren Längenbereich 312 unterteilt. Der Längenbereich 310 ist mit einem Teller 30 verbunden, der auf der Welle 1 befestigt ist, so daß das Kupplungselement 3 von der Welle 1 bei deren Drehung aufgenommen wird.

Das angetriebene Kupplungselement 4 ist ebenfalls durch einen magenetisch neutralen Zwischenbereich, der als Zwischenscheibe 43 ausgebildet ist, in einen ersten Längenbereich 40 und einen zweiten Längenbereich 44 unterteilt. Beide Längenbereiche 40 und 44 sind magnetisch aktivierbar.

Die Kupplungselemente 3 und 4 besitzen somit jeweils zwei magnetisch (durch den Zwischenbereich 311 bzw. die Zwischenscheibe 43) voneinander getrennte Längenbereiche 310 und 312 bzw. 40 und 44.

Die beiden Längenbereiche 310 und 312 sowie der Zwischenbereich 311 des Kupplungselementes 3 bilden zusammen eine Hülse 31, welche den Längenbereich 40 des Kupplungselementes 4 mantelartig umgibt. Dabei beläßt sie zwischen sich und dem Längenbereich 40 einen Umfangsspalt 20.

Der Umfangsspalt 20 zwischen dem antreibenden Kupplungselement 3 und dem angetriebenen Kupplungselement 4 wird axial durch zwei Dichtungsringe 400 und 401 begrenzt. Diese sind in Umfangsnuten 402 und 403 des Kupplungselementes angeordnet und legen sich dichtend an die Innenumfangsfläche 313 der Hülse 31 an. Die Dichtungsringe 400 und 401 sind dabei im Abstand beidseitig vom Zwischenbereich 311 angeordnet. Sie schließen zwischen sich, der Innenumfangsfläche 313 und der Außenumfangsfläche des Längenbereiches 40 des Kupplungselements 4 einen ringförmigen Raum ein, der mit einem magnetisierbaren Pulver 21 gefüllt ist.

Der mit magnetisierbarem Pulver 21 gefüllte Raum erstreckt sich in axialer Richtung beidseitig über den Zwischenbereich 311 hinaus, so daß das Pulver 21 bei Magnetisierung die beiden Längenbereiche 310 und 312 miteinander verbinden kann.

Das angetriebene Kupplungselement 4 trägt an seinem Stirnende 41, welches dem Teller 30 des antreibenden Kupplungselementes 3 zugewandt ist, eine Scheibe 42 aus nichtmagnetisierbarem Material. Diese Scheibe 42 soll verhindern, daß ein direkter Magnetfluß vom Stirnende 41 des Kupplungselementes 4 zum Teller 30 des Kupplungselementes 3 entstehen kann.

Die Zwischenscheibe 43 zwischen den beiden Längenabschnitten 40 und 44 sowie der Längenabschnitt 40 erstrecken sich radial ebenso weit nach außen wie der Längenbereich 312 des Kupplungselementes 3. Dabei wird in axialer Richtung ein schmaler Spalt 22 zwischen der Hülse 31 und der Zwischenscheibe 43 belassen, um Relativbewegungen zwischen den beiden Kupplungselementen 3 und 4 zu ermöglichen.

An den zweiten Längenbereich 44 des Kupplungselementes 4 schließt sich ein im Durchmesser reduzierter Längenbereich 45 an. Dieser Längenbereich 45 leitet die ihm übertragene Antriebsbewegung an ein nicht gezeigtes Arbeitselement weiter oder ist selber als Arbeitselement, beispielsweise als Lieferwalze einer Offenend-Spinnvorrichtung, ausgebildet.

Die Längenbereiche 44 und 45 reichen unter Belassung eines engen Ringspaltes 23 an die Welle 1 heran, um einen Magnetfluß zwischen der Welle 1 und den Längenbereichen 44 und 45 zuzulassen.

Die Längenbereiche 40 und 44/45 sowie die Scheibe 42 und die Zwischenscheibe 43 werden mit Hilfe von Schrauben 46 - von denen jeweils nur eine gezeigt ist - aus nicht magnetisierbarem Material zusammengehalten.

Der Kupplung 2 ist ein Elektromagnet 5 zugeordnet, der zwei Polschuhe 50 und 51 sowie ein die Polschuhe 50 und 51 miteinander verbindendes Joch 52 aufweist. Der Polschuh 50 reicht radial, evtl. unter Belassung eines kleinen Spaltes (nicht gezeigt), bis zum Längenbereich 312 des Kupplungselementes 3, während der Polschuh 51 in gleicher weise bis zum Längenbereich 44 des Kupplungselementes 4 reicht. Somit ist jeweils dem zweiten Längenbereich 312 bzw. 44 der Kupplungselemente 3 und 4 je ein Polschuh 50 bzw. 51 zugeordnet.

Da die Längenbereiches 310 und 312 bzw. 40 und 44 in Längsrichtung, nämlich durch einen Zwischenbereich 311 bzw. eine Zwischenscheibe 43, voneinander getrennt sind, sind auch die Polschuhe in Längsrichtung der Kupplung 2 nebeneinander angeordnet, so daß der Luftspalt 24 zwischen den Polschuhen 50 und 51 in Umfangsrichtung der Kupplung 2 verläuft. Da gemäß dieser Anordnung die Polschuhe 50 und 51 längs einer gemeinsamen Mantellinie der Kupplung 2 angeordnet sind, erstreckt sich auch das zwischen den Polschuhen 50 und 51 aufgebaute Magnetfeld 58 im wesentlichen parallel zu dieser Mantellinie.

Das Joch 52 trägt eine Spule 53, deren Wicklungsenden, unter Zwischenschaltung eines Schalters 54, mit einem Stromnetz 55 in Verbindung stehen.

Wie Fig. 7 zeigt, erstreckt sich der Elektromagnet 5 mit seinen Polschuhen 50 und 51 knapp über den halben Umfang der Kupplungslemente 3 und 4. Der Elektromagnet 5 ist unabhängig von der Welle 1 gelagert und weist eine mechanische Verbindung weder mit den Kupplungselementen 3 und 4 noch mit der Welle 1 auf. Somit können die Kupplungselemente 3 und 4 jederzeit ohne Eingriff in die elektrische Versorgung der Kupplung gewartet und, falls nötig, ausgetauscht werden.

Bei dem als Beispiel gewählten Anwendungsfall ist jeder Kupplung 2 noch ein zusätzlicher Elektromagnet 5a zustellbar, der genauso aufgebaut ist wie der Elektromagnet 5 und dessen beide Polschuhe 50a und 51a ebenso wie die Polschuhe 50 und 51 mit den Längenbereichen 312 und 44 der Kupplungselemente 3 und 4 zusammenarbeiten.

Wird die Kupplung 2 durch Schließen des Schalters 54 angesteuert, so baut sich zwischen den Polschuhen 50 und 51 über den Längenbereich 312 des Kupplungselementes 3, das magnetisierbare Pulver 21, den Längenbereich 310 und die Scheibe 30 des Kupplungselementes 3, die Welle 1, den Ringspalt 23 und den Längenabschnitt 44 des Kupplungselementes 4 ein Magnetfeld 58 auf. Das magnetisierbare Pulver 21 verdichtet sich und bewirkt somit eine Antriebsverbindung zwischen dem Kupplungselement 3, das durch die Welle 1 stets angetrieben wird, und dem Kupplungselement 4.

Da weder der Elektromagnet 5 noch der Elektromagnet 5a die Kupplungselemente 3 und 4 um mehr als 180° umgreift, ist genügend Platz vorhanden, so daß gleichzeitig beide Elektromagneten 5 und 5a den Längenbereichen 312 und 44 der Kupplungselemente 3 und 4 zugeordnet werden können. Die Kupplung 2 wird somit allein durch entsprechende Steuerung der Spulen 53 und 53a gesteuert.

Die Fig. 1 und 7 zeigen die Kupplung 2 in Verbindung mit einer Offenend-Spinnvorrichtung und einem längs einer Vielzahl derartiger Offenend-Spinnvorrichtungen verfahrbaren Wartungsgerät 57. Bei einer solchen Ausbildung kann der von einem Faden 141 gesteuerte Schalter 54 eine erste Schaltposition (siehe Fig. 1 rechts) einnehmen, in welcher er die Spule 53 mit dem Stromnetz 55 verbindet. Darüber hinaus kann er eine zweite Stellung (siehe Fig. 1 links) einnehmen, in welcher die Spule 53 stromlos ist und statt ihrer das Stromnetz 55 mit einer Rufleitung 56 verbunden ist. Diese Rufleitung steuert einen Fahrantrieb für einen Elektromagneten 5a, der auf dem verfahrbaren Wartungsgerät 57 angeordnet ist.

Der Längenbereich 45 des Kupplungselementes 4 bildet die Lieferwalze oder treibt diese an. Mit der Lieferwalze arbeitet eine Speisemulde 12 zusammen. Mit Hilfe der Lieferwalze (z.B. Längenbereich 45 des Kupplungselementes 4) wird das Faserband 14 einer Auflösewalze 13 zugeführt, die das Faserband 14 zu Einzelfasern 140 auflöst und durch einen Faserspeisekanal 15 einem beispielsweise als Spinnrotor 16 ausgebildeten Spinnaggregat zuführt. Dort werden die Einzelfasern 140 in das Ende des Fadens 141 eingebunden und durch ein Fadenabzugsrohr 17 mit Hilfe von Abzugswalzen 18 und 180 abgezogen. Der durch die Abzugswalzen 18 und 180 vom Spinnrotor 16 abgezogene Faden 141 wird auf eine Spule 19 aufgewickelt, die ihren Antrieb von einer Spulwalze 190 erhält.

Der Faden 141 passiert auf seinem Weg zwischen Fadenabzugsrohr 17 und Abzugswalzen 18, 180 einen Fadenwächter 540, der mit einer Steuervorrichtung 541 in Verbindung steht. Diese Steuervorrichtung 541 entspricht dem in Fig. 1 gezeigten Schalter 54 und steuert die Spule 53 sowie eine Lampe 542. Die Lampe 542 kann durch eine Photozelle 570 abgetastet werden, die am Wartungsgerät 57 angebracht ist und bewirkt, daß dieses, wenn es die betreffende Spinnstelle bei seiner Fahrt längs den Spinnstellen erreicht, angehalten wird. Die Photozelle 570 steht mit einer Steuereinheit 571 des Wartungsgerätes 57 in Verbindung, welche den Anspinnvorgang in an sich bekannter Weise steuert. Im Rahmen dieses Anspinnprogrammes wird auch die Lieferwalze - die beispielsweise durch den Längenbereich 45 des Kupplungselementes 4 gebildet wird - über den zweiten Elektromagneten 5a gesteuert, wie dies oben im Detail beschrieben worden ist.

Während des normalen Spinnbetriebes wird die durch den Längenbereich 45 des Kupplungselementes 4 antreibbare oder gebildete Lieferwalze von der Welle 1 durch Erregung des stationären Magneten 5 angetrieben. Hierbei führt diese Lieferwalze in an sich bekannter Weise dem Offenend-Spinnaggregat (Spinnrotor 16) das zu einem Faden 141 zu verspinnende Faserband 14 zu.

Kommt es zu einem Fadenbruch, so gelangt der Fadenwächter 540 oder der Schalter 54 in seine zweite Stellung (siehe Fig. 1 links). In dieser Stellung wird die Stromzufuhr zur Spule 53 unterbrochen, so daß die Lieferwalze stillgesetzt wird. Außerdem wird die Rufleitung 56 mit dem Stromnetz 55 verbunden. Diese Rufleitung kann die Aufgabe haben, das Wartungsgerät 57 zum Beheben des Fadenbruches zu der betreffenden Spinnstelle zu rufen oder ein stets sämtliche Spinnstellen abfahrendes Wartungsgerät 57 zur Durchführung dieser Arbeit an dieser Spinnstelle (siehe Lampe 542 und Photozelle 570) anzuhalten. Das Fadenbruchbeheben erfolgt dann in an sich bekannter Art und Weise. Hierbei ist es zu einem bestimmten Zeitpunkt erforderlich, die zuvor (vom Fadenwächter 540 bzw. Schalter 54 aus) stillgesetzte Lieferwalze wieder anzutreiben, um dem Spinnaggregat die für das Fadenbruchbeheben benötigten Fasern zuzuführen. Dies geschieht durch Erregung der Spule 53a. Dabei kann durch entsprechende Steuerung der Stärke des der Spule 53a zugeführten Stromes jedes gewünschte Anlaufverhalten der Lieferwalze erreicht werden.

Sämtliche, für das Fadenbruchbeheben erforderlichen Arbeitsgänge einschließlich der Steuerung der Lieferwalze während dieser Zeit erfolgen vom verfahrbaren Wartungsgerät 57 aus. Ist die Fadenbruchbehebung abgeschlossen, so wird der Faden 141 nach Erreichen der normalen Fadenspannung wieder an die Offenend-Spinnmaschine übergeben. Dabei wird durch die wiederhergestellte Fadenspannung der Fadenwächter 540 bzw. der Schalter 54 wieder in die Stellung gebracht, in welcher die Verbindung zur Rufleitung 56 unterbrochen und die Verbindung zur Spule 53 wieder hergestellt wird.

Es ist auch möglich, in einer Übergangsphase beide Elektromagneten 5 und 5a gleichzeitig zu erregen, um einen besonders sanften Antriebsübergang vom Elektromagneten 5a auf den Elektromagneten 5 für den Antrieb der Lieferwalze zu erreichen. Die Voraussetzung hierfür wird dadurch geschaffen, daß sowohl der Elektromagnet 5 als auch der Elektromagnet 5a die Kupplungselemente 3 und 4 maximal um 180° umgreift.

Je nach Ausbildung der Spinnstelle und des Wartungsgerätes 57 kann es genügen, wenn der Elektromagnet 5a starr auf dem verfahrbaren Wartungsgerät 57 angeordnet ist, so daß er durch dessen Fahrbewegung in seine Arbeitsstellung gebracht wird, in welcher er die Kupplung 2 steuern kann. Wenn eine Bewegung des Elektromagneten 5a längs der Maschine, d.h. parallel zu Achse der Welle 1, nicht ausreichend ist, so kann zusätzlich noch eine Radialbewegung vorgesehen werden, um nach Positionierung des Wartungsgerätes 57 den Elektromagneten 5a quer zur Fahrbewegung der Kupplung 2 zuzustellen. Dies kann beispielsweise dadurch ermöglicht werden, daß der auf dem Wartungsgerät 57 angeordnete Elektromagnet 5a auf einer Achse, die parallel zur Welle 1 angeordnet ist, schwenkbar gelagert ist.

Um bei beweglichen Elektromagneten 5a nicht zu enge Toleranzen für dessen Bewegung hin zur Kupplung 2 einhalten zu müssen, können die Polschuhe mit gleitfähigem Material, z.B. Bronze, beschichtet sein.

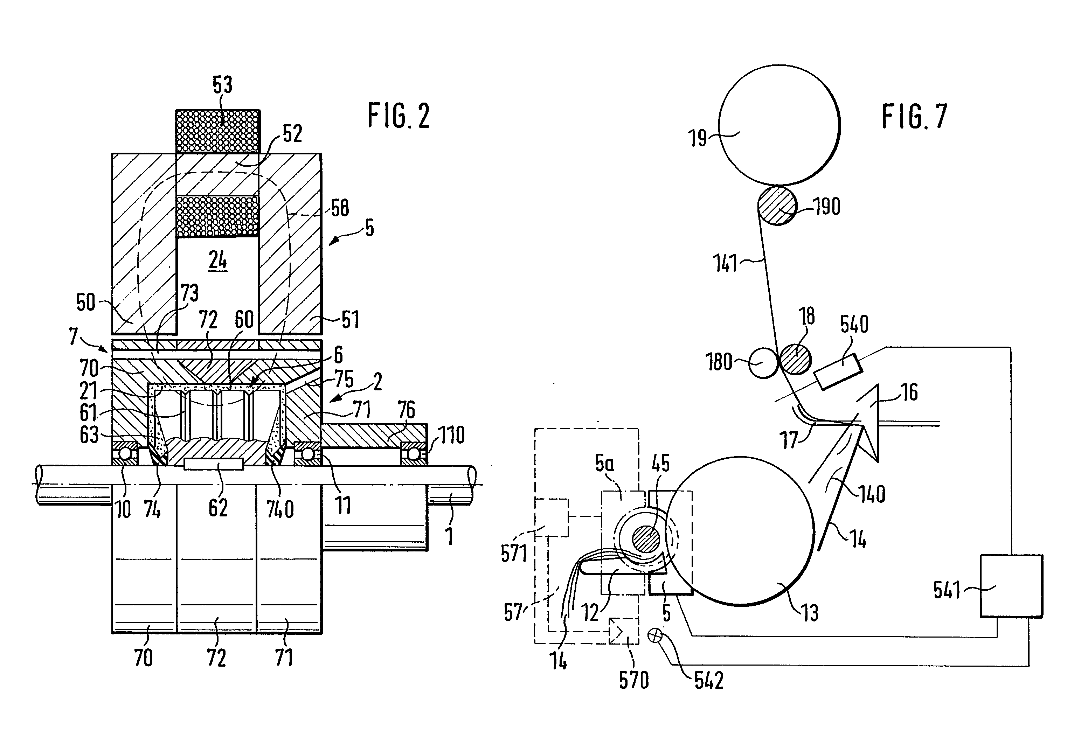

Die Kupplung 2 kann in vielfältiger Weise abgewandelt werden. Gemäß Fig. 2 besteht das antreibende Kupplungselement 6 der Kupplung 2 aus magnetisierbarem Material. Es besitzt eine im wesentlichen zylindrische Gestalt und weist in seiner mit dem magnetisierbaren Pulver 21 in Berührung stehenden Mantelfläche 60 in dieser mehrere Umfangsnuten 61 auf. Durch diese Umfangsnuten 61 weicht das Kupplungselement 6 von der Zylinderform ab, wobei sich die mit dem Pulver 21 stehende Berührungsfläche vergrößert und somit die Mitnahmefähigkeit verbessert. Eine ähnliche Maßnahme zur Vergrößerung der mit dem magnetisierbaren Pulver in Kontakt befindlichen Oberfläche kann natürlich auch für das angetriebene Kupplungselement 7 vorgesehen werden.

Mit der Welle 1 ist das Kupplungselement 6 mittels einer Feder 62, die in Längsnuten der Welle 1 und des Kupplungselementes 6 eingelegt ist, drehfest verbunden. An seinen Stirnseiten besitzt das Kupplungselement 6 konusförmige Vertiefungen 63.

Das angetriebene Kupplungselement 7 besitzt zwei schalenförmige Längenbereiche 70 und 71 aus magnetisierbarem Material, die einen Zwischenring 72 aus nicht magnetisierbarem Material, z.B. Messing, zwischen sich einschließen. Die zwei schalenförmigen Längenbereiche 70 und 71 sowie der Zwischenring 72 sind durch Schrauben 73 miteinander verbunden. Diese Schrauben 73 bestehen aus nicht magnetisierbarem Material, z.B. aus Messing.

Die schalenförmigen Längenbereiche 70 und 71 sowie der Zwischenraum 72 umschließen zusammen einen Raum, der das Kupplungselement 6 aufnimmt. Dabei ist zwischen den Kupplungselementen 6 und 7 ein Zwischenraum belassen, der eine Relativbewegung der Kupplungselemente 6 und 7 zueinander zuläßt. Der Zwischenraum ist zur Welle 1 hin durch Dichtungsringe 74 und 740 begrenzt. Der verbleibende Zwischenraum ist mit dem magnetisierbaren Pulver 21 gefüllt. Zur Einfüllung des Pulvers 21 besitzt der schalenförmige Längenbereich 71 eine verschließbare Einfüllöffnung 75.

Auf seiner dem Kupplungselement 6 abgewandten Seite setzt sich der schalenförmige Längenbereich 71 mit reduziertem Durchmesser fort und bildet einen zylinderförmigen Ansatz 76, der als Arbeitselement ausgebildet oder mit einem solchen verbunden ist. Das Kupplungselement 7 ist mit Hilfe von Wälzlagern 10, 11 und 110 auf der Welle 1 gelagert.

Die beiden Längenbereiche 70 und 71 enden beide radial im Abstand von der Welle 1. Außerdem sind die Stirnseiten der Längenbereiche 70 und 71 durch die Vertiefungen 63 im Abstand vom Kupplungselement 6 angeordnet. Auf diese Weise wird sichergestellt, daß sich das Magnetfeld 58 allein um den durch den Zwischenring 72 gebildeten Spalt ausbilden kann.

Den beiden schalenförmigen Längenbereichen 70 und 71 ist ein Elektromagnet 5 zugeordnet, der je nach Anwendungsfall stetig, oder nur vorübergehend der Kupplung 2 zugestellt ist bzw. wird.

Die magnetisch aktivierbaren Längenbereiche 70 und 71 bilden somit die radialen Fortsetzungen der beiden Polschuhe 50 und 51 und schließen zwischen sich in Fortsetzung des Luftspaltes 24 den magnetisch neutralen Zwischenring 72 ein, der sich radial nach innen verjüngt. Damit verbleibt zwischen den einander zugekehrten Enden der Längenbereiche 70 und 71 nur ein geringer Spalt, der bewirkt, daß in diesem Bereich sich ein besonders intensives Magnetfeld 58 aufbaut, so daß das Pulver 21 bei Erregung des Elektromagneten 5 gut verdichtet wird und eine gute Antriebsverbindung zwischen den Kupplungselementen 6 und 7 bewirkt. Bei nichterregtem Elektromagneten 5 rotiert allein das Kupplungselement 6 mit der Welle 1, während das Kupplungselement 7 stillsteht.

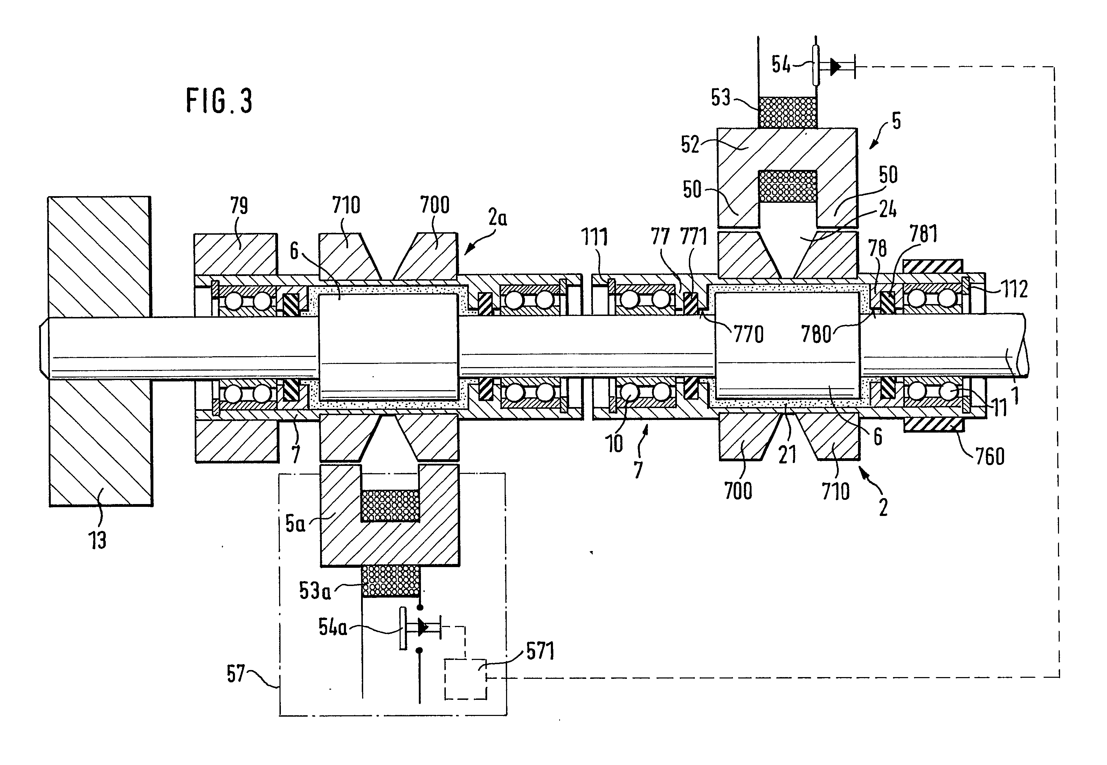

Gemäß der vorstehenden Beschreibung wurde die Kupplung 2 stets eingesetzt, um die Drehung der Welle 1 auf eine Walze (angetriebenes Kupplungselement 4 oder 7) zu übertragen. Selbstverständlich ist auch die Umkehr hiervon möglich, wie rechts in Fig. 3 gezeigt. Bei der dort abgebildeten Ausführung ist das Kupplungselement 6 ebenfalls, wie in Fig. 2 gezeigt, zylinderförmig ausgebildet und kann auch, falls gewünscht, Umfangsnuten 61 (siehe Fig. 2) aufweisen. Das Kupplungselement 7 besteht bei diesem Ausführungsbeispiel aus magnetisch neutralem Material und besitzt die Form einer dünnwandigen Hülse, die auf einer Seite vom Kupplungselement 6 eine Radialwand 77 aufweist. Diese besitzt eine Bohrung 770, durch welche hindurch die Welle 1 ragt. Die Radialwand 77 nimmt zur Abdichtung gegenüber der Welle 1 einen Dichtungsring 771 auf.

Auf der der Radialwand 77 abgewandten Seite wird ein Ring 78 in das Kupplungselement 7 eingebracht. Dieser Ring 78 besitzt eine Bohrung 780 zur Aufnahme der Welle 1 und nimmt zur Abdichtung gegenüber der Welle 1 einen Dichtungsring 781 auf.

An seinen beiden Enden nimmt das Kupplungselement 7 im Anschluß an die Radialwand 77 und an den Ring 78 die Wälzlager 10 und 11 auf, mittels derer es auf der Welle 1 gelagert ist. Die Wälzlager 10 und 11 sind mittels Sprengringen 111 und 112 axial im Kupplungselement 7 gesichert.

In den Zwischenraum, den einerseits das dünnwandige Kupplungselement 7 oder ein zumindest in diesem Bereich dünnwandiger Längenbereich hiervon und andererseits die Welle 1 sowie das Kupplungselement 6 begrenzen, ist in geeigneter Weise magnetisierbares Pulver 21 eingefüllt.

Auf dem hülsenförmigen Kupplungselement 7 sitzen in axialem Abstand, jedoch im axialen Längenbereich des Kupplungselementes 6, zwei Ringe 700 und 710 aus magnetisierbarem Material. Der axiale Abstand der beiden Ringe 700 und 710 nimmt radial nach außen hin zu. Mit diesen Ringen 700 und 710 arbeitet der Elektromagnet 5 zusammen, so daß die Ringe die magnetische Verbindung zwischen je einem Polschuh 50 und 51 einerseits und dem mit dem magnetisierbaren Pulver 21 gefüllten Zwischenraum andererseits herstellen.

Der Hülsenmantel des Kupplungselementes 7 ist äußerst dünn, so daß der Magnetfluß nicht wesentlich beeinträchtigt wird. Bei Erregung des Elektromagneten 5 baut sich das Magnetfeld 58 zwischen den Polschuhen 50 und 51 über den Ring 700, das Pulver 21, das Kupplungselement 6, das Pulver 21 und den Ring 710 auf, so daß über das magnetisierte Pulver 21 eine antriebsmäßige Verbindung zwischen dem Kupplungselement 7 und dem Kupplungselement 6 entsteht.

Das Kupplungselement 7 dient als Wirtel, der von einem Antriebsriemen 760 umschlungen und durch diesen angetrieben wird. Ist der Elektromagnet 5 erregt, so wird über das Kupplungselement 6 auch die Welle 1 angetrieben. Gemäß Fig. 3 sitzt auf einem Ende dieser Welle 1 eine Walze, beispielsweise die in Fig. 7 gezeigte Auflösewalze 13.

Die Ausbildung und Steuerung bzw. der Einsatz der Kupplung 2 ist nicht auf die beschriebenen Ausführungsbeispiele eingeschränkt, sondern die Vorrichtung kann durch Austausch von Merkmalen gegen Äquivalente und durch andere Kombinationen in vielfältiger Weise abgewandelt werden, wie die erläuterten Ausführungsbeispiele zeigen.

Vorstehend wurde die Arbeitsweise der Kupplung 2 als ein eine Drehbewegung übertragendes Element beschrieben. Es ist aber auch möglich, eine derartige Kupplung 2a als Bremse einzusetzen. Dies wird nachstehend anhand der linken Seite der Fig. 3 beschrieben.

Bei dieser Ausbildung wird das Kupplungselement 7 durch eine Halterung 79 drehfest gehalten. Wird der Elektromagnet 5a erregt, so bewirkt das am Drehen gehinderte Kupplungselement 7 über das magnetisierbare Pulver 21 eine Abbremsung des Kupplungselementes 6 und der mit diesem verbundenen Welle 1.

Gemäß Fig. 3 wird, wie bereits erwähnt, durch diese Welle 1 die Auflösewalze 13 einer Offenend-Spinnvorrichtung angetrieben. Die Welle 1 ihrerseits erhält ihren Antrieb von einem Antriebsriemen 760 über eine erste Kupplung 2, die durch einen stationär an der betreffenden Offenend-Spinnstelle angeordneten Elektromagneten 5 gesteuert wird. Der zweite Elektromagnet 5a, welcher einer zweiten Kupplung 2a zustellbar ist, befindet sich auf dem fahrbaren Wartungsgerät 57. Ist dieses in der bereits beschriebenen Weise an der zu wartenden Spinnstelle angekommen - um beispielsweise einen Fadenbruch zu beheben - so wird der Antrieb des an der betreffenden Spinnstelle vorgesehenen Schalters 54 in nichtgezeigter Weise mit der Steuereinheit 571 des Wartungsgerätes steuermäßig verbunden. Dem Elektromagneten 5a auf dem Wartungsgerät 57 ist ein Schalter 54a vorgeschaltet, der durch die Steuereinheit 571 steuerbar ist. Zum Stillsetzen der Auflösewalze 13 wird der Schalter 54 geöffnet, um die antriebsmäßige Verbindung zwischen dem Kupplungselement 7 und dem Kupplungselement 6 der Kupplung 2 aufzuheben. Gleichzeitig wird der Schalter 54a geschlossen, um mit Hilfe der Kupplung 2a die Welle 1 bis zum Stillstand abzubremsen.

Die vorstehende Beschreibung zeigt, daß die Kupplung 2 bzw. 2a sich sowohl zur Antriebsübertragung als auch zum Abbremsen einer Welle eignet. Darüber hinaus läßt sich die Kupplung sowohl durch einen stationären als auch durch einen beweglichen Elektromagneten 5 bzw. 5a steuern. Es ist ferner möglich, die Kupplung 2 bzw. 2a überlappend von zwei Elektromagneten 5 und 5a aus zu steuern. Dies bringt außerordentliche Vorteile nicht nur im Hinblick auf die Steuerung, sondern ermöglicht eine einfache Bauweise und einen Ausbau der Kupplung 2 und 2a unabhängig von den für seine elektrische Steuerung benötigten Elementen (Elektromagnet 5 bzw. 5a mit Spulen 53 bzw. 53a).

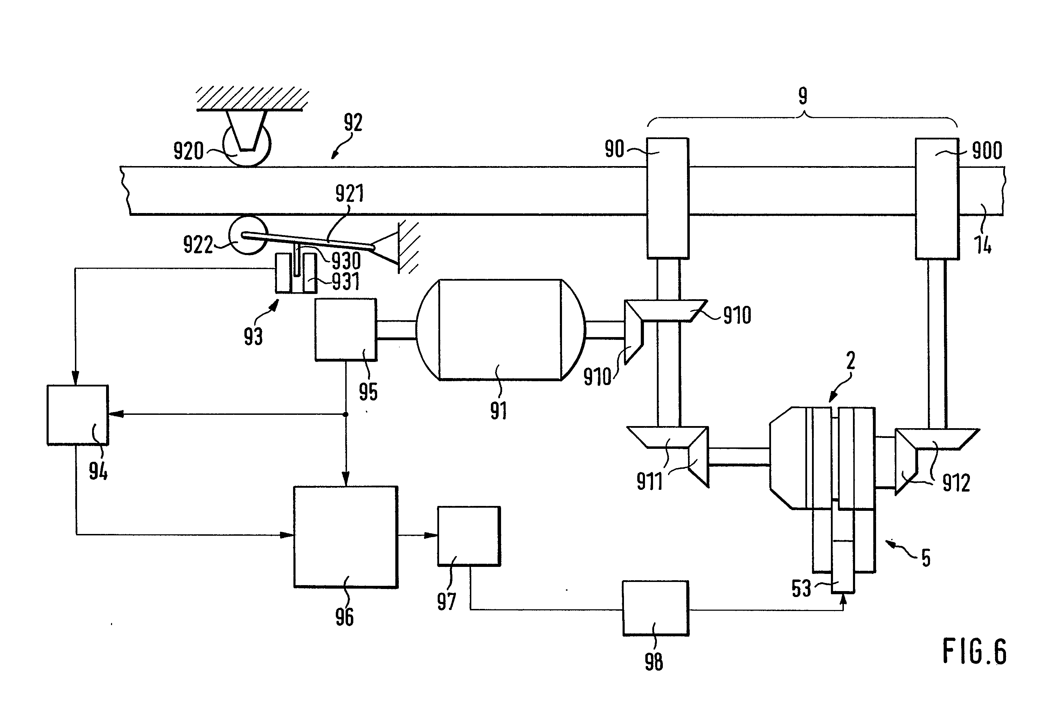

Fig. 6 zeigt einen anderen Anwendungsfall für die Kupplung 2, die beispielsweise gemäß Fig. 1 aufgebaut ist. Die Kupplung 2 ist Teil einer Vorrichtung zum selbsttätigen Vergleichmäßigen von Faserbändern und dergleichen. Diese besitzt ein Verzugsfeld 9, das durch Einzugswalzen 90 und Ablieferwalzen 900 begrenzt ist. Die Einzugswalzen 90 werden über ein Getriebe 910 von einem Motor 91 aus angetrieben. Die Ablieferwalzen 900 werden vom Motor 91 aus über zwei Winkelgetriebe 911 und 912 sowie die zwischen diesen Winkelgetrieben 911 und 912 angeordnete Kupplung 2 angetrieben. Diese Kupplung 2 wird in der geschilderten Weise mit Hilfe eines Elektromagneten 5 gesteuert.

Dem Verzugsfeld 9 ist im Abstand eine Abtastvorrichtung 92 vorgeschaltet. Diese weist eine ortsfeste Stützrolle 920 sowie eine am Ende dieses Schwenkhebels 921 angeordnete Abtastrolle 922 auf. Dem Schwenkhebel 921 ist eine elektrische Meßeinrichtung 93 zugeordnet. Diese weist einen aus Eisen bestehenden Anker 930 sowie eine Spule 931 auf. Durch nichtgezeigte Mittel wird für eine lineare Bewegung des Ankers 930 in der Spule 931 gesorgt. Je nach Stellung des Ankers 930 relativ zur Spule 931 - d.h. je nachdem, wie weit der Anker 930 in die Spule 931 eintaucht - wird eine unterschiedlich große elektrische Größe (Spannung) erzeugt. Diese elektrische Größe wird einem Analog-/Digital-Umsetzer 94 zugeführt. Der Analog-/Digital-Umsetzer 94 ist mit einem vom Motor 91 angetriebenen Taktgeber 95 verbunden. Der Ausgang des Analog-/Digital-Umsetzers 94 ist mit einem Fortschaltspeicher 96 verbunden, der seinerseits vom Taktgeber 95 aus fortgeschaltet wird. Die durch den Fortschaltspeicher 96 erzielte Speicherzeit ist auf die Transportdauer der abgetasteten Stelle des Faserbandes 14 bis ins Verzugsfeld 9 abgestellt.

Mit dem Ausgang des Fortschaltspeichers 96 ist ein Digital-/Analog-Umsetzer 97 verbunden, der seinerseits über einen Umwandler 98 mit der Spule 53 des Elektromagneten 5 verbunden ist. Der Umwandler 98 wandelt die vom Digital-/Analog-Umsetzer 97 gelieferten Spannungswerte in Stromstärke-Werte um, die für die Steuerung der Spule 53 benötigt werden.

Die Einzugswalzen 90 und die Ablieferwalzen 900 werden in einem bestimmten Geschwindigkeitsverhältnis zueinander angetrieben, um einen definierten Verzug des Faserbandes 14 zu erzielen. Änderungen des Verzugsverhältnisses, die aufgrund von Schwankungen in der Stärke des Faserbandes 14 erforderlich werden, werden selbsttätig mit Hilfe der Kupplung 2 ausgeführt. Die Verdichtung des magnetisierbaren Pulvers 21 erfolgt nämlich nicht schlagartig, sondern je nach Größe des ihm zugeführten elektrischen Wertes in unterschiedlicher Weise. Somit ist die in der Spule 931 erzeugte, im Fortschaltspeicher 96 digital zwischengespeicherte und dann wieder als Analogwert abgegebene und in Stromstärke umgewandelte Spannung maßgeblich für das Maß der Drehungsübertragung zu den Ablieferwalzen 900.

Bei einer Vorrichtung gemäß Fig. 6 genügt ein einziger Elektromagnet 5. Die Anordnung dieses Magneten 5 außerhalb der Kupplung 2 ermöglicht eine montage- und wartungsfreundliche Ausbildung.

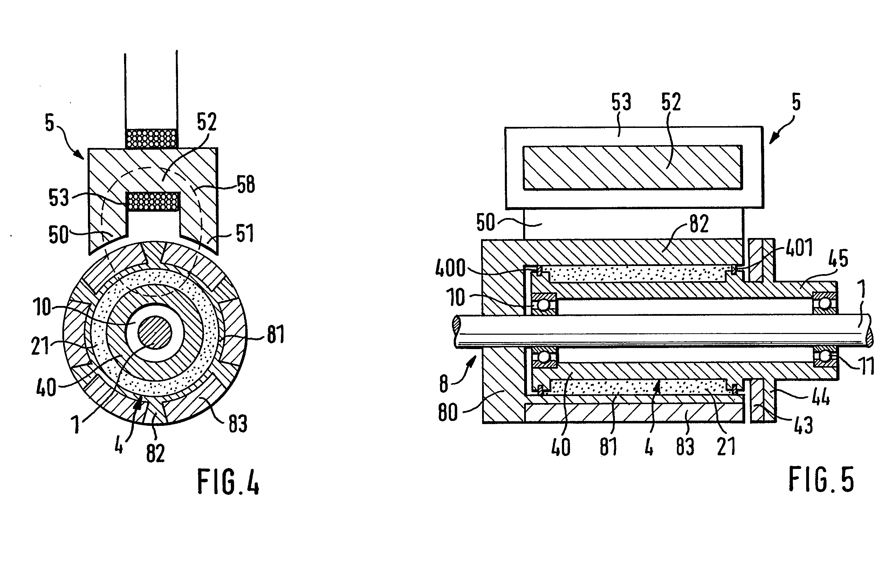

Es ist nicht zwingend erforderlich, daß sich die Polschuhe 50 und 51 des Elektromagneten 5 bzw. die Polschuhe 50a und 51a des Elektromagneten 5a in Umfangsrichtung der Kupplung 2 erstrecken, somit längs einer Mantellinie der Kupplung 2 angeordnet sind, wodurch sich auch das zwischen den Polschuhen 50 und 51 aufbauende Magnetfeld 58 parallel zu dieser Mantellinie erstreckt. Die Fig. 4 und 5 zeigen eine Ausbildung, bei welcher die Polschuhe 50 und 51 des Elektromagneten 5 in Längsrichtung der Kupplung 2 orientiert und somit längs einer Umfangslinie der Kupplung 2 angeordnet sind, so daß das sich zwischen den Polschuhen 50 und 51 aufbauende Magnetfeld parallel zu dieser Umfangslinie verläuft.

Bei einer derartigen Ausbildung, bei welcher sich das Magnetfeld 58 parallel zu einer Umfangslinie der Kupplung erstreckt, lassen sich größere Kräfte übertragen als bei den zuvor geschilderten Ausbildungen der Kupplung 2, obwohl sich die Polschuhe 50 und 51 maximal über 180° des Umfanges der Kupplung 2 erstrecken. Das ist darauf zurückzuführen, daß die sich längs der Mantellinie der Kupplung 2 erstreckenden Polschuhe 50 und 51 eine beliebige, frei wählbare Länge aufweisen können, so daß die Wirkungsbreite vergrößert werden kann.

Das antreibende Kupplungselement 8 ist mit einem tellerartigen Endstück 80 fest mit der Welle 1 verbunden. Es besitzt ferner einen hülsenartigen Längenbereich 81, der zahnartig radial nach außen ragende Stege 82 aufweist. Diese Stege 82 verjüngen sich radial nach innen.

Zwischen den Stegen 82 besitzt das Kupplungselement 8 Einlagen 83 aus magnetisch aktivierbarem Material, während der Rest des Kupplungselementes 8 magnetisch neutral ist. Die magnetisierbaren Einlagen 83 sind in axialer Richtung der Kupplung 2 orientiert und im wesentlichen im gleichen gegenseitigen Abstand wie die Polschuhe 50 und 51 angeordnet.

Der hülsenartige Längenbereich 81 des Kupplungselementes 8 überragt einen ebenfalls hülsenartigen Längenbereich 40 des Kupplungselementes 4, welcher an seinen Enden je einen Dichtungsring 400 und 401 trägt. Der durch die Längenbereiche 40 und 81 sowie die Dichtungsringe 400 und 401 gebildete ringförmige Raum ist mit dem magnetisierbaren Pulver 21 gefüllt.

Das in den Fig. 4 und 5 dargestellte Kupplungselement 4 ist im übrigen im wesentlichen in gleicher Weise wie das in Fig. 1 gezeigte Kupplungselement 4 aufgebaut und gelagert. Da das radiale Endstück 80 des Kupplungselementes 8 aus magnetisch nicht aktivierbarem Material besteht, erübrigt sich die in Fig. 1 gezeigte Scheibe 42.

Bei nicht erregtem Elektromagneten 5 hat sich das Pulver 21 nicht verdichtet mit der Folge, daß bei der Rotation der Welle 1 und des Kupplungselementes 8 das Kupplungselement 4 nicht mitgenommen wird.

Wird nun der Elektromagnet 5 erregt, so baut sich über die dem Polschuh 50 benachbarte Einlage 83, das Pulver 21, den Längenbereich 40 des Kupplungselementes 4, das Pulver 21 sowie die dem Polschuh 51 benachbarte Einlage 83 ein Magnetfeld 58 zwischen den beiden Polschuhen 50 und 51 auf. Durch die hierdurch bewirkte Verdichtung des magnetisierten Pulvers 21 wird somit das Kupplungselement 4 vom Kupplungselement 8 mitgenommen.

Da auch dann, wenn das Magnetfeld 58 durch das weiterdrehende Kupplungselement 8 unterbrochen ist, die Verdichtung des magnetisierbaren Pulvers 21 nicht sofort aufgehoben wird, bleibt die Mitnahmewirkung aufrechterhalten, bis sich ein neues Magnetfeld 58 aufbaut, wenn sich wiederum zwei Einlagen 83 vor den Polschuhen 50 und 51 befinden.

**Ansprüche**

1. Elektromagnetisch steuerbare Kupplung mit einem antreibenden und einem angetriebenen Kupplungselement, von denen das eine Kupplungselement das andere, aus magnetischem Material bestehende Kupplungselement radial wenigstens teilweise umfaßt unter Belassung eines mit magnetisierbarem Pulver aufgefüllten Zwischenraumes, sowie mit einem Polschuhe aufweisenden Elektromagneten, mit welchem dieser die beiden Kupplungselemente im Bereich des Zwischenraumes umfaßt, **dadurch gekennzeichnet,** daß der Elektromagnet (5, 5a) und die Kupplungselemente (3, 4; 6, 7; 8, 4) unabhängig voneinander gelagert sind, daß die Polschuhe (50, 51; 50a, 51a) des Elektromagneten (5, 5a) maximal den halben Umfang der Kupplungselemente (3, 4; 6, 7; 8, 4) umfassen und daß zwischen den Polschuhen (50, 51; 50a, 51a) ein radial nach innen bis zum Zwischenraum reichender, magnetisch neutraler Bereich (311, 72, 82) vorgesehen ist.

2. Kupplung nach Anspruch 1, **dadurch gekennzeichnet,** daß den Kupplungselementen (3, 4; 6, 7;, 8, 4) ein zusätzlicher Elektromagnet (5a) zugeordnet werden kann.

3. Kupplung nach Anspruch 1 oder 2, **dadurch gekennzeichnet,** daß der Elektromagnet (5, 5a) radial und/oder axial zu den Kupplungselementen (3, 4; 6, 7; 8, 4) verstellbar ist.

4. Kupplung nach Anspruch 3, **dadurch gekennzeichnet,** daß der Elektromagnet (5, 5a) schwenkbar gelagert ist.

5. Kupplung nach einem oder mehreren der Ansprüche 2 bis 4, **dadurch gekennzeichnet,** daß die Kupplung (2) eine Antriebswelle (1) mit einer Faserband-Lieferwalze verbindet und wahlweise durch einen ersten, stationären Elektromagneten (5) oder einen zweiten, der Kupplung (2) zustellbaren Elektromagneten (5a) steuerbar ist, welcher längs einer Vielzahl gleichartiger Offenend-Spinnvorrichtungen bewegbar ist.

6. Kupplung nach einem oder mehreren der Ansprüche 1 bis 5, **dadurch gekennzeichnet,** daß die Polschuhe (50, 51; 50a, 51a) mit gleitfähigem Material beschichtet sind.

7. Kupplung nach einem oder mehreren der Ansprüche 1 bis 6, **dadurch gekennzeichnet,** daß die Polschuhe (50, 51; 50a, 51a) längs einer Mantellinie der Kupplung (2) angeordnet sind und das zwischen ihnen aufgebaute Magnetfeld (58) im wesentlichen parallel zu dieser Mantellinie verläuft.

8. Kupplung nach Anspruch 7, bei welcher das erste Kupplungselement drehfest mit einer Welle verbunden und das zweite Kupplungselement lose drehbar auf der Welle gelagert ist, **dadurch gekennzeichnet,** daß beide Kupplungselemente (3, 4) und die Welle (1) aus magnetisierbarem Material bestehen, daß beide Kupplungselemente (3, 4) jeweils zwei Längenbereiche (310, 312; 40, 44) aufweisen, die magnetisch voneinander getrennt sind, daß das erste Kupplungselement (3) durch drehfeste Verbindung seines ersten Längenbereichs (310) und das zweite Kupplungselement (4) über einen engen Ringspalt (23) magnetisch mit der Welle (1) verbunden sind, daß das erste Kupplungselement (3) den Zwischenraum mit Hilfe seines ersten und seines zweiten Längenbereiches (310, 312) sowie eines magnetisch neutralen Zwischenbereiches (311) gemeinsam radial nach außen begrenzt, daß das zweite Kupplungselement (4) den Zwischenraum mit Hilfe seines ersten Längenbereiches (40) radial nach innen begrenzt und daß jeweils dem zweiten Längenbereich (312, 44) der beiden Kupplungselemente (3, 4) je ein Polschuh (50, 51; 50a, 51a) des Elektromagneten (5, 5a) zugeordnet ist.

9. Kupplung nach Anspruch 7, **dadurch gekennzeichnet,** daß im Bereich des Zwischenraumes das den Zwischenraum radial nach außen begrenzende Kupplungselement (7) dünnwandig ausgebildet ist und aus magnetisch neutralem Material besteht.

10. Kupplung nach Anspruch 9, **dadurch gekennzeichnet,** daß das den Zwischenraum radial nach außen begrenzende Kupplungselement (7) im Bereich des Zwischenraumes zwei magentisierbare Ringe (700, 710) trägt, welche die magnetische Verbindung zwischen den beiden Polschuhen (50, 51; 50a, 51a) und dem den Zwischenraum radial nach innen begrenzenden Kupplungselement (6) herstellen.

11. Kupplung nach Anspruch 7, **dadurch gekennzeichnet,** daß das den Zwischenraum radial nach außen begrenzende Kupplungselement (7) in radialer Fortsetzung der Polschuhe (50, 51; 50a, 51a) Längenbereiche (70, 71) aus magnetisierbarem Material besitzt, welche den magnetisch neutralen Bereich (72) zwischen sich einschließen.

12. Kupplung nach einem oder mehreren der Ansprüche 1 bis 6, **dadurch gekennzeichnet,** daß die Polschuhe (50, 51; 50a, 51a) längs einer Umfangslinie der Kupplung (2) angeordnet sind und das zwischen ihnen aufgebaute Magnetfeld (58) im wesentlichen parallel zu dieser Umfangslinie verläuft und daß das den Zwischenraum radial nach außen begrenzende Kupplungselement (8) aus nichtmagnetisierbarem Material besteht und auf seiner Außenseite mehrere in axialer Richtung orientierte Einlagen (83) aus magnetisierbarem Material aufnimmt, die im wesentlichen im gleichen gegenseitigen Abstand wie die Polschuhe (50, 51; 50a, 51a) angeordnet sind.

13. Kupplung nach einem oder mehreren der Ansprüche 1 bis 12, **dadurch gekennzeichnet,** daß mindestens eine der den Zwischenraum begrenzenden Flächen der beiden Kupplungselemente (6, 7) eine von der Zylinderform abweichende Form aufweist.

FIG. 2

FIG. 7

EP 0 351 538 A1

FIG.3

FIG.4

FIG.5

EP 0 351 538 A1

FIG.6

EP 0 351 538 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 809 733 (PERRY) <br> * Spalten 1-5; Figuren 1,3 * | 1,2,4, 13 | F 16 D 37/02 |
| Y | | 7,11 | |
| Y | FR-A-1 485 622 (LABINAL) <br> * Insgesamt * | 7,11 | |
| Y | FR-A-1 022 636 (TURCK) <br> * Seiten 2,3; Figuren 1,2 * | 1,2,4,7 ,8,11- 13 | |
| Y | US-A-3 832 509 (MIKHAILOV) <br> * Insgesamt * | 1,2,4,7 ,8,11- 13 | |
| Y | US-A-2 673 631 (GOLD) <br> * Insgesamt * | 12 | |
| Y | US-A-3 618 720 (LINKE) <br> * Insgesamt * | 1,4,7, 11-13 | |
| Y | US-A-3 871 301 (KOLM) <br> * Insgesamt * | 1,4,7, 11-13 | RECHERCHIERTE SACHGEBIETE (Int. Cl.5) <br><br> F 16 D 37/00 <br> H 01 F |
| A | US-A-3 171 995 (PONSY) | | |
| A | US-A-3 358 798 (JANSON) | | |
| A | FR-A-2 093 367 (CREUSOT-LOIRE) | | |
| A | DE-B-1 062 993 (ELEKTRO-MECHANIK) | | |

Der vorliegende Recherchenbericht wurde für alle Patentansprüche erstellt

| Recherchenort | Abschlußdatum der Recherche | Prüfer |
|---|---|---|
| DEN HAAG | 11-10-1989 | BALDWIN D.R. |